# EUROPEAN PATENT APPLICATION

(11) **EP 1 562 188 A1**
(43) Date of publication of application: **10.08.2005**
(21) Application number: 04002785.6
(22) Date of filing: 09.02.2004
(51) Int. Cl.: G11B 7/24

(54) **Improved rewritable optical storage medium**

(71) Applicant: Optodisc Technology Corporation, Hukou, Hsinchu 303, Taiwan, R.O.C. (TW)
(72) Inventor: Ho, Wu-Hsuan, Hukou Hsinchu 303 Taiwan, R.O.C. (TW); Chung, Yi-Chen, Hukou Hsinchu 303 Taiwan, R.O.C. (TW); Chou, Shih-Hsiang, Hukou Hsinchu 303 Taiwan, R.O.C. (TW)
(74) Representative: Casalonga, Axel

(57) **Abstract**

An improved rewritable optical storage medium comprises from bottom to top a substrate, a first dielectric layer, a recording layer, a second dielectric layer, and a reflective layer. Nitrogen is added into the ZnS-SiO₂ material of the first and second dielectric layers to enhance the shielding effect of the dielectric layers to the recording layer and also prevent sulfur of the dielectric layers from diffusing to the recording layer, thereby greatly increasing the number of rewritable times of the optical storage medium.

## Description

### Field of the invention

The present invention relates to an optical storage medium and, more particularly, to a rewritable optical storage medium.

### Background of the invention

Among various kinds of storage media, optical storage media become the most popular due to their characteristics of low price, large storage capacity, popularity, high compatibility, and convenient portability. Because of more and more demands for high quality multimedia contents like image and sound, DVD disks having high storage capacity have gradually replaced original optical disks to become the new main-stream format.

Basically, DVD disks can be classified into three categories: DVD-ROM, DVD-R and DVD-RW, representing read-only optical disk, write-once optical disk and rewritable optical disk, respectively. A common rewritable optical disk is a phase-change optical disk. Laser pulses are used to change the crystallization state of a recording layer of the optical disk for causing a difference in the reflectivity. The crystallization phase has a large reflectivity, while the amorphous phase has a small reflectivity. Through discrimination the reflected signals between different reflectivity, 0 and 1 signals can be generated to accomplish the object of digital data storage.

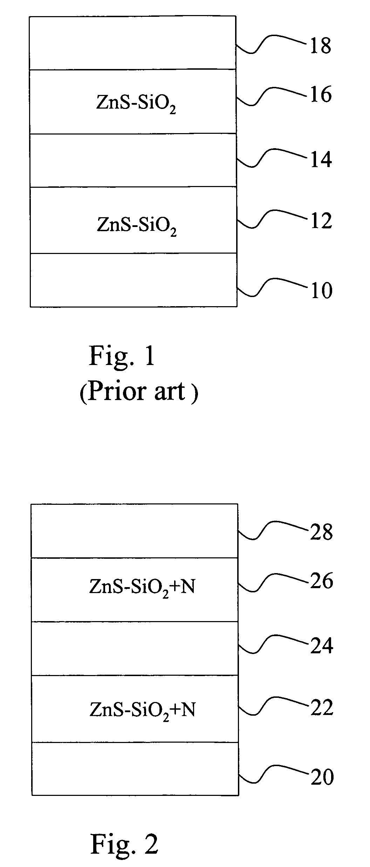

As shown in Fig. 1, a first dielectric layer 12, a recording layer 14, a second dielectric layer 16 and a reflective layer 18 are formed in order on a transparent substrate 10. The recording layer 14 is made of a material capable of changing between crystallization state and amorphous state in a short time. When a high-energy laser beam is used to write data, the recording layer will become a melting state. Therefore, dielectric layers are required above and below the recording layer to isolate it. The second dielectric layer 16 is also used to adjust the heat-radiating speed. The reflective layer 18 is used to provide a heat sink for heat radiation of the recording layer 14.

The number of rewritable times of conventional rewritable optical disks of the DVD-RW and DVD+RW formats is about 1000. This is because that the isolation effect of the dielectric layers above and below the recording layer is not good. Sulfur in the dielectric layers will diffuse to the recording layer to greatly reduce the number of rewritable times. Therefore, it has been suggested that an intermediate layer is added between the dielectric layer and the recording layer to enhance the number of rewritable times. However, this method not only increase the production cost of optical disks, but also has limited improvement to the number of rewritable times.

### Summary of the invention

The primary object of the present invention is to provide an improved rewritable optical disk structure to increase the number of rewritable times of a rewritable optical recording medium.

Another object of the present invention is to provide a rewritable optical disk structure to increase the number of rewritable times without greatly raising the production cost.

To achieve the above objects, the present invention propose an improved rewritable optical storage medium, which is a multi-layer structure comprises from bottom to top a substrate, a first dielectric layer, a recording layer, a second dielectric layer, and a reflective layer. The first and second dielectric layers are composed of ZnS-SiO₂. Nitrogen is added in the first and second dielectric layers to enhance the shielding effect of the dielectric layers to the recording layer, thereby greatly increase the number of rewritable times of the optical storage medium.

The various objects and advantages of the present invention will be more readily understood from the following detailed description when read in conjunction with the appended drawing, in which:

### Brief description of the drawings:

Fig. 1 is a structure diagram of a conventional rewritable optical storage medium;
Fig. 2 is a structure diagram of an improved rewritable optical storage medium of the present invention; and
Fig. 3 is a cyclability test diagram showing the jitter value vs. the number of rewritable times with and without nitrogen added.

### Detailed description of the preferred embodiments

As shown in Fig. 2, an improved rewritable optical storage medium comprises a substrate 20, a first dielectric layer 22, a recording layer 24, a second dielectric layer 26, and a reflective layer 28. The material of the substrate 20 can be transparent plastic or glass. Most of the substrates 20 of optical storage media are low-price plastic substrates.

The material of the recording layer 24 needs to finish phase change between the crystallization state and the amorphous state in a very short time. Moreover, the amorphous state at the room temperature needs to be very stable. In this embodiment, the recording layer 24 is made of the AgInSbTe quaternary alloy. The composition percentage of the recording layer 24 can be 4%∼6% Ag, 8%∼10% In, 55%∼60% Sb and 24%∼33% Te, or 1.5%∼3% Ag, 6%∼8% In, 65%∼68% Sb and 21%∼27.5% Te. In addition to the AgInSbTe quaternary alloy, the material of the recording layer 24 can be alloy like GeInSbTe or GeSbSn.

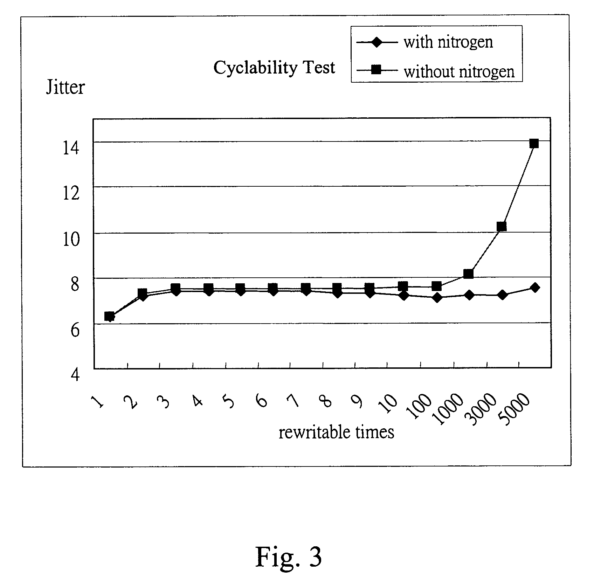

The first dielectric layer 22 and the second dielectric layer 26 are located below and above the recording layer 24, respectively. The primary functions of the first and second dielectric layers 22 and 26 are to protect the recording layer 24 and to avoid mutual melting between layers at local high temperatures. When recording, the instantaneous temperature of the recording layer 24 can be as high as 500-600 degrees of centigrade. The first dielectric layer 22 provide appropriate isolation between the substrate 20 and the recording layer 24. Moreover, when recording, the recording layer 24 melts from solid state and then cools immediately, hence causing the problem of hot expansion and cold shrinkage. The dielectric layers 22 and 26 can provide appropriate protection for the recording layer 24. Another object of the second dielectric layer 26 is to adjust the heat-radiating speed. The common material of the dielectric layers is a mixture of ZnS and SiO₂, which has the characteristics of small thermal expansion coefficient, low optical absorption, and high thermal resistance. However, sulfur element in the dielectric layers will gradually diffuse to the recording layer to affect the number of rewritable times of the recording layer. In order to increase the number of rewritable times of the optical storage medium, nitrogen element is added in the ZnS-SiO₂ material of the dielectric layers. The composition percentage of the nitrogen element in the ZnS-SiO₂ is about 0.5∼15%. Experiments show that the shielding effect of the dielectric layers to the recording layer can be enhanced with nitrogen element added, hence greatly increasing the number of rewritable times of the recording layer. In Fig. 3, the x-axis represents the number of rewritable times, while the y-axis (the jitter value) represents the stability of the position and length of written marks. Generally, the smaller the jitter value, the higher the accuracy. If the jitter value is higher than a certain value, the optical storage medium can't be read. As can be seen from Fig. 3, the jitter value starts to rise slowly after about 5000 rewritable times with nitrogen element added, but rises substantially after about 1000 rewritable times without nitrogen element. Therefore, with nitrogen element added in the first and second dielectric layers 22 and 26, the number of rewritable times of the optical storage medium increases from 1000 to 5000.

The reflective layer 28 on the second dielectric layer 26 provides a heat sink for heat radiation of the recording layer 24. The material of the reflecting later 28 can be selected from the group formed of oxidation-resistant metals like Ag, Al, Ti, Cr having a high reflectivity or their alloys.

Besides, other stacked layers can be formed on the reflective layer 28 to protect the whole optical storage medium, prevent moisture and oxidation of metals, and provide printing of patterns and brands.

To sum up, in the present invention, nitrogen element is added in the dielectric layers of an optical storage medium to greatly increase the number of rewritable times. It is only necessary to add in nitrogen element during the formation process of the dielectric layers without the need of increasing the number of stacked layers of the whole optical storage medium, hence not affecting the production cost. Moreover, the improved structure applies to DVD disks of several formats like the DVD-RW, DVD+RW and DVD-RAM.

Although the present invention has been described with reference to the preferred embodiment thereof, it will be understood that the invention is not limited to the details thereof. Various substitutions and modifications have been suggested in the foregoing description, and other will occur to those of ordinary skill in the art. Therefore, all such substitutions and modifications are intended to be embraced within the scope of the invention as defined in the appended claims.

## Claims

1. An improved rewritable optical storage medium comprising from bottom to top a substrate, a first dielectric layer, a recording layer, a second dielectric layer, and a reflective layer, said first and second dielectric layers being composed of ZnS-SiO₂, nitrogen being added in said first and second dielectric layers.

2. The rewritable optical storage medium as claimed in claim 1, wherein said recording layer is composed of AgInSbTe.

3. The rewritable optical storage medium as claimed in claim 1, wherein said recording layer is composed of GeInSbTe.

4. The rewritable optical storage medium as claimed in claim 1, wherein said recording layer is composed of GeSbSn.

5. The rewritable optical storage medium as claimed in claim 1, wherein the material of said reflective layer is selected from the group formed of metals like Al, Ti, Cr, Ag and their alloys.

6. The rewritable optical storage medium as claimed in claim 1, wherein said optical storage medium is a DVD optical disk of the DVD-RW format.

7. The rewritable optical storage medium as claimed in claim 1, wherein said optical storage medium is a DVD optical disk of the DVD+RW format.

8. The rewritable optical storage medium as claimed in claim 1, wherein said optical storage medium is a DVD optical disk of the DVD-RAM format.
